# EUROPÄISCHE PATENTANMELDUNG

(11) **EP 0 704 995 A2**
(43) Veröffentlichungstag der Anmeldung: **03.04.1996**
(21) Anmeldenummer: 95115407.9
(22) Anmeldetag: 29.09.1995
(51) Int. Cl.: H04B 10/12

(54) **Netzwerk zur Verbindung von optischen Sensoren**

(30) Priorität: 29.09.1994 DE 4434813
(71) Anmelder: HÜLS AKTIENGESELLSCHAFT, D-45764 Marl (DE)
(72) Erfinder: Landwehr, Dierk, Dr., D-48249 Dülmen (DE); Auf der Heyde, Wolfgang, Dr., D-45721 Haltern (DE); Heinrich, Lothar, Dr., D-48165 Münster (DE); Rogner, Arnd, Dr., D-45549 Sprockhövel (DE); Ünal, Nezih, D-44227 Dortmund (DE)

(57) **Zusammenfassung**

Optische Sensoren zur Bestimmung von auf optischem Weg erfaßbaren Eigenschaften von Gasen, Flüssigkeiten und Feststoffen sind bisher nur mit erheblichem Aufwand unter erschwerten Umgebungsbedingungen (z. B. in korrosiven Atmosphären, ex-gefährdeten Bereichen) einsetzbar. Das neue Verfahren sowie die neuen Vorrichtungen sollen die Einsetzbarkeit optischer Sensoren erweitern sowie eine flexiblere und wirtschaftlichere Übertragung optischer Signale als bisher ermöglichen.

Der oder die optischen Sensoren werden von zumindest einer Auswerteeinheit mit zumindest einem Strahlungsempfänger räumlich getrennt. Das oder die optischen Signale der optischen Sensoren, die im VIS/NIR/IR-Spektralbereich liegen, werden mittels Lichtwellenleitern, die ein Netzwerk bilden können, übertragen.

Aufbau von optischen Netzwerken aus Lichtwellenleitern zur Übertragung von Strahlung und optischen Signalen in VIS/NIR/IR-Spektralbereich zwischen optischen Sensoren sowie Strahlungsempfängern und/oder Strahlungsquellen.

## Beschreibung

Die Erfindung betrifft ein Verfahren und geeignete Vorrichtungen zum Übertragen von Strahlung und/oder optischen Signalen im VIS/NIR/IR-Spektralbereich zwischen optischen Sensoren sowie optischen Peripheriebauelementen zur Strahlungserzeugung oder zur Auswertung der optischen Signale.

Die Erfindung bezweckt, die Verbindung von optischen Sensoren und von optischen Peripheriebauelementen flexibler und wirtschaftlicher zu gestalten, und eröffnet neue oder verbesserte Anwendungsmöglichkeiten für optische Sensoren.

Unter optischen Sensoren werden alle Vorrichtungen verstanden, bei denen über eine bestimmte Strecke Strahlung durch Absorption oder Emission in ihrer Wellenlänge oder Intensität verändert wird.

Das Verbinden elektrischer Sensoren und elektrischer Peripheriegeräte zu elektrischen Netzwerken ist nicht nur dem Fachmann bekannt. Die Übertragung von elektrischen Signalen durch elektrische Leiter, die ein leichtes Verzweigen bzw. Koppeln der elektrischen Signale erlauben, ermöglicht den Aufbau komplexer Netzwerkstrukturen, die z. B. in der Prozeßautomation und -überwachung zur Anwendung kommen.

Auch die Übertragung von Strahlung (Licht) und optischen Signalen ist aus einer Vielzahl von Anwendungen gemeinhin bekannt; Beispiele sind die Übertragung von Licht für Beleuchtungszwecke in z. B. Endoskopen oder die Übertragung von Telefongesprächen oder Fernsehprogrammen auf optischem Weg über große Entfernungen durch Lichtwellenleiter. Optische Übertragungssysteme, die der Übertragung von Informationen durch optische Signale dienen, bestehen dabei typischerweise aus
- einem elektrooptischen Umsetzer, der zunächst das elektrische Sendesignal in ein optisches Signal umsetzt,
- einem Lichtwellenleiter (LWL), der zur optischen Übertragung über meist große Entfernungen dient, sowie
- einem optoelektronischen Umsetzer als Empfänger, der das optische Signal wieder in ein elektrisches Signal umwandelt und der Weiterverarbeitung und Auswertung zuführt.

Ein derartiges optisches Übertragungssystem erlaubt zwar hohe Übertragungsraten zwischen Sender und Empfänger, stellt gleichzeitig aber für sich eine starre Struktur dar, die einen Zugriff auf das Übertragungssignal nur an den Endpunkten vor oder nach der Umsetzung in Form des elektrischen Signals erlaubt.

In nach optischen Verfahren arbeitenden Geräten üblicher Baugröße, wie z. B. in herkömmlichen Spektrometern, sind Strahlungsquelle, optischer Sensor und Strahlungsempfänger räumlich nicht weit voneinander getrennt. Derartige Geräte lassen sich nur mit hohem Aufwand in korrosiven Atmosphären oder ex-gefährdeten Bereichen einsetzen und sind auch wegen ihrer Abmessungen in den Anwendungsmöglichkeiten begrenzt.

Optische Sensoren geringer Baugröße mit Abmessungen von wenigen Zentimetern sind ebenfalls bekannt, z. B. die in DE-44 34 814.2 beschriebenen Mikro-Spektrometer. Aufgrund ihrer Abmessungen eröffnen sich optischen Sensoren geringer Baugröße grundsätzlich größere Anwendungsmöglichkeiten durch den Einbau in oder an Apparaten und Anlagen, doch ist auch ihr Einsatz wegen der Kopplung mit Strahlungsquelle und -empfänger unter erschwerten oder mit einem Gefährdungspotential verbundenen Umgebungsbedingungen, also z. B. in korrosiven Medien oder ex-gefährdeten Bereichen, nur unter hohem Aufwand möglich.

Damit stellt sich die Aufgabe, eines neues Verfahren zum Verbinden optischer Sensoren und optischer Peripheriebauelemente anzugeben, mit denen auf optischem Wege erfaßbare Eigenschaften gemessen werden, das einen Einsatz der Sensoren unter erschwerten oder mit einem Gefährdungspotential verbundenen Umgebungsbedingungen erlaubt und gleichzeitig verglichen mit bisherigen optischen Übertragungssystemen wirtschaftlicher und flexibler ist, sowie geeignete Vorrichtungen bereitzustellen.

Diese Aufgabe wird erfindungsgemäß dadurch gelöst, daß zumindest durch einen optischen Sensor durch Verändern der emittierten Strahlung einer Strahlungsquelle ein optisches Signal erzeugt wird, das mittels eines oder mehrerer Lichtwellenleiter zu zumindest einer räumlich getrennten Auswerteeinheit (mit Strahlungsempfänger) übertragen wird, wobei das oder die optischen Signale im VIS/NIR/IR-Spektralbereich (Wellenlänge: 400 bis 10 000 nm; Wellenzahl: 25 000 bis 1 000 cm⁻¹) liegen. Gleichermaßen können zusätzlich Strahlungsquelle und optischer Sensor räumlich voneinander getrennt sein. Es können gleichzeitig eine oder mehrere Strahlungsquellen, ein oder mehrere optische Sensoren und eine oder mehrere Auswerteeinheiten (mit Strahlungsempfängern) über LWL beliebig verbunden und zu einem optischen Netzwerk untereinander verknüpft sein. Eine Auswerteeinheit kann über ein oder mehrere Strahlungsempfänger verfügen.

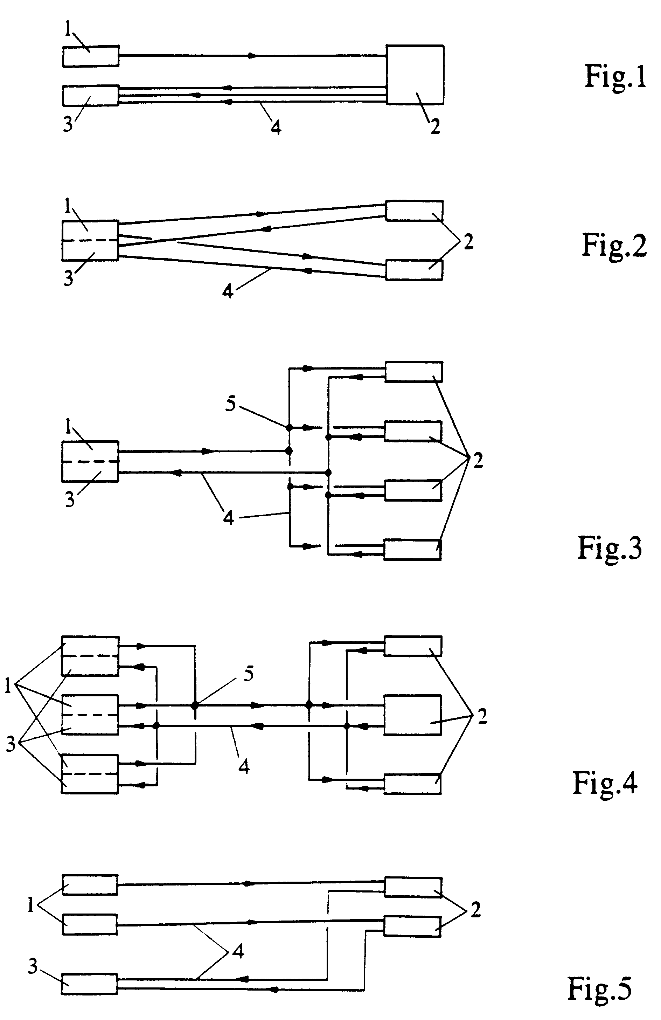

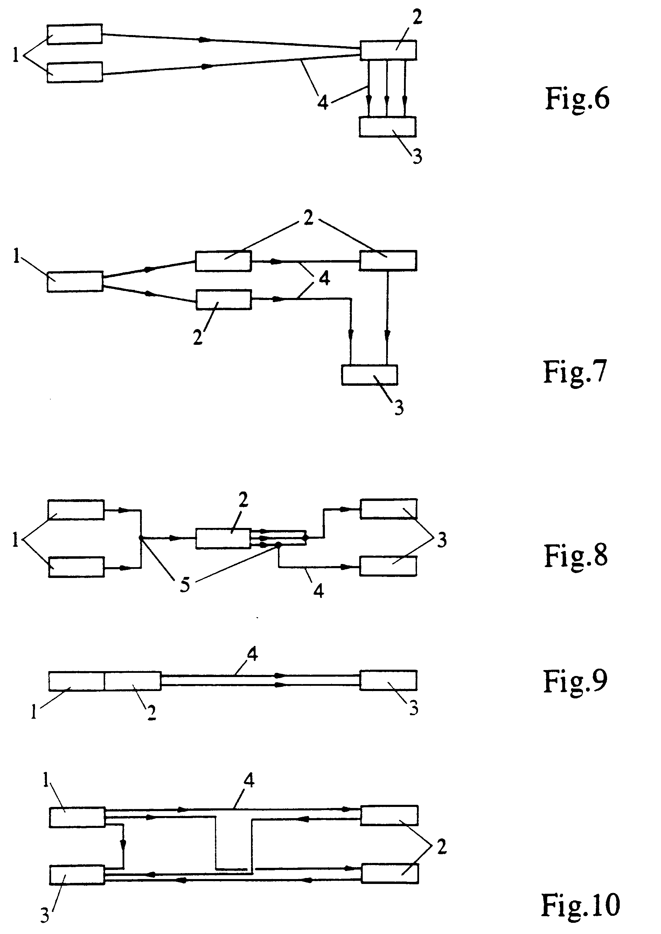

Verschiedene mögliche Netzwerkstrukturen sind in den Figuren 1 bis 10 dargestellt. Darin bedeuten:
1 - Strahlungsquelle
2 - Optischer Sensor
3 - Auswerteeinheit (mit ein oder mehreren Strahlungsempfängern)
4 - Lichtwellenleiter
5 - Koppler-Baustein
Aufgrund der Vielzahl an Kombinationsmöglichkeiten der Komponenten sind weitere Ausführungsformen möglich.

Als Strahlungsquellen können alle bekannten Strahlungsquellen dienen, also z. B. Glühlampen, Gasentladungslampen, Laser, Lumineszenzdioden. Als Strahlungsempfänger können alle bekannten Empfänger verwendet werden, die optische Strahlungsenergie in elektrische Energie oder Wärme umwandeln oder die nach dem Photoeffekt arbeiten, also z. B. Photozellen, Photoelemente, Photodioden. Die Übertragung der Strahlung und/oder der optischen Signale erfolgt mit LWL; übliche LWL sind runde, dünne Fasern aus (Quarz-)Glas oder Kunststoff. Die zum Aufbau der Netzwerke verwendeten Koppler-Bausteine erlauben das Verzweigen oder Zusammenführen optischer Signale zum Zweck der weiteren Übertragung.

Als optische Sensoren dienen alle Sensoren, die zur Bestimmung von auf optischem Wege meßbaren Eigenschaften von Gasen, Flüssigkeiten oder Feststoffen verwendet werden. Besonders geeignet sind optische Sensoren geringer Baugröße (meist ohne elektrische Hilfsenergie), deren Abmessungen in den Raumkoordinaten kleiner als 10 Zentimeter sind. Bevorzugt eingesetzt werden Mikrospektrometer oder Meßzellen, in denen die emittierte Strahlung der Strahlungsquelle in ihrer Intensität oder Wellenlänge verändert wird.

Die Wellenlänge der eingesetzten Strahlung oder der optischen Signale liegt zwischen 0,4 µm und 10 µm. Für spezielle Anwendungsfälle ist der Wellenlängenbereich von etwa 0,8 µm bis 3 µm besonders geeignet. Der verwendete Spektralbereich wird so gewählt, daß die optischen Eigenschaften des LWL-Materials eine optische Signalübertragung im LWL zulassen. Zum Aufbau erfindungsgemäßer Netzwerke sind Übertragungslängen kleiner als 100 m meist ausreichend.

Das erfindungsgemäße Verfahren läßt sich realisieren durch die erfindungsgemäße Vorrichtung nach Patentanspruch 11 zum Übertragen von Strahlung und optischen Signalen im VIS/NIR/IR-Spektralbereich, bei der zumindest ein LWL ein optisches Signal zwischen eines optischen Sensor und mindestens einer Auswerteeinheit für optische Signale überträgt.

Durch weitere Ausgestaltung der erfindungsgemäßen Vorrichtung erhält man eine Vorrichtung mit eines oder mehreren LWL zwischen einem oder mehreren optischen Sensoren geringer Baugröße und einer oder mehreren Auswerteeinheiten mit ein oder mehreren Strahlungsempfängern für die optischen Signale, wobei die LWL ein Netzwerk bilden und die Strahlungsquelle oder -quellen ebenfalls über LWL mit den optischen Sensoren geringer Baugröße und den Auswerteeinheiten verbunden sind.

Das erfindungsgemäße Verfahren und die erfindungsgemäßen Vorrichtungen zum Übertragen von Strahlung und optischen Signalen zwischen optischen Sensoren und optischen Peripheriebauelementen haben folgende Vorteile:
- räumliche Trennung von optischem Sensor, Auswerteeinheit (mit Strahlungsempfänger) und ggf. auch Strahlungsquelle, dadurch möglicher
- Einsatz des optischen Sensors unter erschwerten oder mit Gefahrenpotential verbundenen Umgebungsbedingungen (z. B. ex-gefährdete Räume, korrosive Medien) oder
- Einsatz des optischen Sensors bei beengten Einbauverhältnissen, gleichzeitig
- Schutz der räumlich getrennten optischen Peripheriebauelemente,
- flexibler, nachträglich modifizierbarer Aufbau von optischen Übertragungssystemen,
- erhöhte Wirtschaftlichkeit in Anschaffung und Betrieb durch gemeinsame Nutzung von Strahlungsquellen und Auswerteeinheiten (mit Strahlungsempfängern),
- Aufbau von optischen Meßsystemen, z. B. zur Bestimmung von Eigenschaften von Gasen, Flüssigkeiten oder Festkörpern, entweder zur simultanen Erfassung einer einzigen Meßgröße an verschiedenen diskreten Orten bzw. zur simultanen Erfassung der räumlichen Verteilung einer einzigen Meßgröße mit sich jeweils anschließender Auswertung oder zur Erfassung verschiedener Meßgrößen an einem Ort mit einem oder mehreren optischen Sensoren mit gemeinsamer Auswertung der Signale,
- Aufbau von Meßsystemen, in denen durch eine Abfragelogik sequentiell gesteuert Meßgrößen in bedarfsgerechter Häufigkeit abgefragt, erfaßt und ausgewertet werden,
- Verwendung optischer Sensoren geringer Baugröße zur weiteren Steigerung der Flexibilität der Übertragungssysteme und zur weiteren Verbesserung der Anwendungsmöglichkeiten sowohl hinsichtlich der Einbausituation als auch hinsichtlich der Kosten.

Das erfindungsgemäße Verfahren und die erfindungsgemäßen Vorrichtungen werden durch die folgenden Beispiele näher erläutert.

### Beispiel 1: Propan-Sensoren an Kältemaschinen

Zur Überwachung der Anlagenfunktion und der Sicherheit des umgebenden Raumes ist an einer mit eines Propan/Butan-Gemisch als Kältemittel arbeitenden Kompressionskältemaschine je ein Propan-sensitives Mikrospektrometer im Bereich des ex-geschützten Verdichters, des Verdampfers und des Expansionsventils angeordnet. Als Strahlungsquelle dient eine Glühlampe, von der aus die Strahlung zunächst über eine Distanz von 5 m in einem Quarzglas-LWL zu einem Koppler-Baustein in Anlagennähe geleitet wird; von dort übertragen drei ca. 1 m lange LWL die Strahlung zu den Mikrospektrometern, die Propan durch Absorption von Strahlung der Wellenzahl von ca. 5 400 cm⁻¹ (dies entspricht der ersten Oberschwingung von Propan) detektieren. Die optischen Signale der Mikrospektrometer werden getrennt mit Quarzglas-LWL einer mit 3 Strahlungsempfängern auf PbSe-Basis versehenen Auswerteeinheit über eine Distanz von etwa 7 m zugeführt und dort verarbeitet. Bei Austritt des Kältemittels aus der Anlage und Erkennung durch ein Mikrospektrometer wird Alarm ausgelöst. Strahlungsquelle und Auswerteeinheit befinden sich außerhalb des bei Austritt von Kältemittel exgefährdeten Bereichs.

### Beispiel 2: Messung der Rauchgastrübung

Zur Messung der Rauchgastrübung in einer Abfallverbrennungsanlage werden zwei Absorptionsmeßzellen in den 320 °C heißen, HCl-haltigen Abgasstrom eingesetzt. Wegen der stark korrosiven Atmosphäre bestehen diese Meßzellen aus je einem Quarzglastubus von 10 cm Länge mit einem Außendurchmesser von 1 cm, der vom Rauchgas durchströmt und der in seiner Längsachse mit Strahlung im VIS-Bereich durchstrahlt wird. Die Stirnseiten sind jeweils über 3 Meter lange LWL aus Quarzglas mit einer Deuteriumlampe als Strahlungsquelle und einer Photozelle als Strahlungsempfänger verbunden, die außerhalb des Abgasstromes zusammen mit einer Auswerteeinheit angeordnet sind und die ermittelten Signale als Maß für die Rauchgastrübung dokumentieren.

### Beispiel 3: Sensoren für mehrere an einer chemischen Reaktion beteiligte Gase

Bei der katalytischen Verbrennung von Abgasen aus einem Hydroformylierungsprozeß entstehen u. a. Methan, Propen, Butyraldehyd und Kohlendioxid in unterschiedlicher zeitlicher Reihenfolge. Für die Prozeßführung ist die Kenntnis der Konzentrationen brennbarer Gase vor der Katalysatorschicht und der Konzentrationen der Oxidationsprodukte hinter dem Reaktionsbehälter von großer Bedeutung, da die zuzuführenden Produktströme entsprechend gesteuert werden müssen. Die Prozeßtemperaturen und -bedingungen erfordern den Einsatz von zwei aufeinander abgestimmten Mikrospektrometern vor dem Reaktor und zwei Mikrospektrometern nach Austritt und Kühlung der Gase, die gemäß Figur 3 über zwei getrennte Netzwerke aus Quarzglas-LWL mit einer Glühlampe als Strahlungsquelle und einer Auswerteeinheit mit Demultiplexer und vier Strahlungsempfängern auf PbSe-Basis verbunden sind. Wegen möglicher Verschmutzung sind hier kostengünstige und schnell auszuwechselnde Mikrospektrometer erforderlich. Die optischen Peripheriebauelemente sind im Leitstand untergebracht, während die Koppler-Bausteine in der Nähe des 23 m vom Leitstand entfernten Reaktors angeordnet sind. Die vier Mikrospektrometer sind jeweils auf die erste Oberschwingung der zu bestimmenden Gase abgestimmt.

Zur Erhöhung der Anlagensicherheit ist eine zweite Auswerteeinheit (mit Strahlungsempfängern) zur ersten parallel geschaltet.

### Beispiel 4: Taschenmeßgerät für toxische Gase

Zur Erkennung des toxischen Gases Kohlenmonoxid wird ein auf die Wellenzahl von ca. 4 400 cm⁻¹ (dies entspricht der ersten Oberschwingung) abgestimmtes Mikrospektrometer über Quarzglas-LWL mit einer Glühlampe und bezüglich des optischen Ausgangssignals mit einem PbS-Empfänger in der Auswerteelektronik verbunden. Während die Auswerteeinheit mit Strahlungsquelle und -empfänger in einer Tasche der Kleidung untergebracht ist, kann der optische Sensor wegen der geringen Baugröße an jeder Stelle der Kleidung unauffällig und ohne bei der Arbeit zu behindern getragen werden.

## Patentansprüche

1. Verfahren zum Übertragen von optischen Signalen im VIS/NIR/IR-Bereich, gekennzeichnet durch
- Erzeugen der optischen Signale durch mindestens einen optischen Sensor,
- Übertragung der optischen Signale aus mindestens einem optischen Sensor mittels eines oder mehrerer Lichtwellenleiter zu mindestens einer räumlich getrennten Auswerteeinheit für die optischen Signale mit mindestens einem Strahlungsempfänger.

2. Verfahren nach Anspruch 1, gekennzeichnet durch
- Erzeugen der optischen Signale durch mehrere optische Sensoren.

3. Verfahren nach den Ansprüchen 1 bis 2, gekennzeichnet durch
- Übertragung der optischen Signale mittels Lichtwellenleitern, die ein Netzwerk bilden.

4. Verfahren nach den Ansprüchen 1 bis 3, gekennzeichnet durch
- Erzeugung der optischen Signale durch mindestens einen optischen Sensor, der über zumindest einen Lichtwellenleiter mit optischer Strahlung versorgt wird.

5. Verfahren nach den Ansprüchen 1 bis 4, gekennzeichnet durch
- direkte oder indirekte Versorgung zumindest eines optischen Sensors über mindestens einen Lichtwellenleiter mit optischer Strahlung durch mindestens eine Strahlungsquelle.

6. Verfahren nach den Ansprüchen 1 bis 5, gekennzeichnet durch
- Hintereinanderschalten mehrerer optischer Sensoren zumindest in den Weg der optischen Strahlung einer Strahlungsquelle, wobei die optischen Sensoren über Lichtwellenleiter verbunden sind.

7. Verfahren nach den Ansprüchen 1 bis 6, gekennzeichnet durch
- Übertragen der optischen Strahlung zumindest einer Strahlungsquelle mittels Lichtwellenleitern, die ein Netzwerk bilden.

8. Verfahren nach den Ansprüchen 1 bis 7, gekennzeichnet durch
- Übertragen der optischen Signale zwischen optischen Sensoren mittels Lichtwellenleitern, die ein Netzwerk bilden.

9. Verfahren nach den Ansprüchen 1 bis 8, gekennzeichnet durch
- Erzeugen der optischen Signale durch ein Mikrospektrometer oder durch eine Meßzelle geringer Baugröße, in der die emittierte Strahlung der Strahlungsquelle in ihrer Intensität oder Wellenlänge verändert wird.

10. Verfahren nach den Ansprüchen 1 bis 9, gekennzeichnet durch
- Übertragen von optischen Signalen im VIS/NIR-Spektralbereich.

11. Vorrichtung zum Übertragen von Signalen im VIS/NIR/IR-Spektralbereich, gekennzeichnet durch
- mindestens einen Lichtwellenleiter zwischen zumindest einem optischen Sensor und mindestens einer räumlich davon getrennten Auswerteeinheit für die optischen Signale mit mindestens einem Strahlungsempfänger.

12. Vorrichtung nach Anspruch 11, gekennzeichnet durch
- mehrere Lichtwellenleiter zwischen mehreren optischen Sensoren und mindestens einer Auswerteeinheit für die optischen Signale mit mindestens einem Strahlungsempfänger.

13. Vorrichtung nach den Ansprüchen 11 und 12, gekennzeichnet durch
- mindestens einen Lichtwellenleiter zwischen mindestens einem optischen Sensor und zumindest einer Auswerteeinheit für die optischen Signale mit mindestens einem Strahlungsempfänger, wobei mehrere Lichtwellenleiter ein Netzwerk bilden.

14. Vorrichtung nach den Ansprüchen 11 bis 13, gekennzeichnet durch
- mindestens einen optischen Sensor, der über zumindest einen Lichtwellenleiter mit optischer Strahlung versorgt wird.

15. Vorrichtung nach den Ansprüchen 11 bis 14, gekennzeichnet durch
- mindestens einen Lichtwellenleiter oder ein Netzwerk aus Lichtwellenleitern zwischen zumindest einer Strahlungsquelle und mindestens einem optischen Sensor.

16. Vorrichtung nach den Ansprüchen 11 bis 15, gekennzeichnet durch
- mehrere optische Sensoren, die direkt durch Lichtwellenleiter oder durch ein Netzwerk aus Lichtwellenleitern miteinander verbunden sind.

17. Vorrichtung nach den Ansprüchen 11 bis 16, gekennzeichnet durch
- mindestens einen optischen Sensor geringer Baugröße, bevorzugt ein Mikrospektrometer oder eine Meßzelle geringer Baugröße, in der die emittierte Strahlung der Strahlungsquelle oder das optische Signal eines optischen Sensors in der Intensität oder Wellenlänge verändert wird.

18. Verwendung einer Vorrichtung nach Anspruch 11 zum Aufbau eines Meßsystems zur Bestimmung von auf optisches Wege meßbaren Eigenschaften von Gasen, Flüssigkeiten und Feststoffen, bevorzugt von Gasen, unter Benutzung des Verfahrens nach Anspruch 1.

19. Verwendung einer Vorrichtung nach Anspruch 11 zum Aufbau eines Gaswarnsystems mit Hilfe von Mikrospektrometern als optischen Sensoren geringer Baugröße, das zumindest bezüglich eines brennbaren Gases sensitiv ist.
